(19) Europäisches Patentamt

European Patent Office

Office européen des brevets

(11) Veröffentlichungsnummer: **0 275 452**
**B1**

(12) # EUROPÄISCHE PATENTSCHRIFT

(45) Veröffentlichungstag der Patentschrift:
24.10.90

(21) Anmeldenummer: 87118121.0

(22) Anmeldetag: 08.12.87

(51) Int. Cl.⁵: **C08F 20/12**

(54) Verfahren zur quasi-ionischen Polymerisation von Acrylsäurederivaten.

(30) Priorität: 20.12.86 DE 3643709

(43) Veröffentlichungstag der Anmeldung:
27.07.88 Patentblatt 88/30

(45) Bekanntmachung des Hinweises auf die Patenterteilung:
24.10.90 Patentblatt 90/43

(84) Benannte Vertragsstaaten:
BE CH DE FR GB IT LI NL

(56) Entgegenhaltungen:
GB-A- 1 048 225

MACROMOLECULES, Band 17, Nr. 7, Juli 1984,
Seiten 1415-1417, American Chemical Society,
Columbus, Ohio, US; W.R. HERTLER et al.:
"Group-transfer polymerization. 3. Lewis acid
catalysis"

(73) Patentinhaber: BAYER AG,
D-5090 Leverkusen 1 Bayerwerk(DE)

(72) Erfinder: Piejko, Karl-Erwin, Dr., Roggendorfstr. 57,
D-5000 Köln 80(DE)
Erfinder: Ostarek, Ralph, Dr., Oskar Erbslöh-Str. 32,
D-5653 Leichlingen(DE)
Erfinder: Reetz, Manfred Theodor, Prof. Dr.,
Wiesentalweg 14, D-3550 Marburg(DE)

## Beschreibung

Die Erfindung betrifft ein verbessertes Verfahren zur quasi-ionischen Polymerisation von Acrylsäurederivaten mit Initiatoren und Zinkhalogeniden als elektrophilen Katalysatoren.

Verfahren zur quasi-ionischen Polymerisation von polaren Monomeren mit einer in $\alpha$-Stellung zur polaren Gruppe befindlichen Doppelbindung, bei denen die Polymerisation mit Hilfe von Initiatoren in Gegenwart elektrophiler oder nucleophiler Katalysatoren ausgelöst wird, sind bekannt (siehe die US-A 4 414 372 und 4 508 880, ferner die DE-A 3 504 168 und Macromolecules, 1984 (17), Seiten 1415-1416). Für die Polymerisation von Acrylsäurederivaten durch quasi-ionische Polymerisation haben sich als elektrophile Katalysatoren besonders Zinkhalogenide bewährt, da sie bei Raumtemperatur Polymere mit sehr enger Molmassenverteilung ergeben ($M_w/M_n$-1,1) (siehe Macromolecules loc. cit.). Die Zinkhalogenide haben jedoch - infolge ihrer Schwerlöslichkeit in den üblicherweise für die quasi-ionische Polymerisation verwendeten organischen Lösungsmitteln - den Nachteil, daß man sie, um technisch sinnvolle Polymerisationszeiten zu erreichen, in sehr großen Mengen (10 bis 20 Mol-%, bezogen auf die zu polymerisierenden Acrylsäurederivate) einsetzen oder aber, bei Verwendung kleinerer Zinkhalogenid-Mengen (Mengen <10 Mol-%), technisch schlecht realisierbare lange Reaktionszeiten in Kauf nehmen muß. Außerdem haben die Polymerisation in den heterogenen Polymerisationsgemischen den Nachteil, daß sie nur schwer beherrschbar sind und deshalb zu schwer reproduzierbaren Ergebnissen führen.

Es wurden nun gefunden, daß man bei der quasi-ionischen Polymerisation von Acrylsäurederivaten mit Initiatoren und Zinkhalogeniden als elektrophilen Katalysatoren entweder mit einer gegebenen Menge Zinkhalogenid eine sehr viel höhere Polymerisationsgeschwindigkeit oder aber eine bestimmte Polymerisationsgeschwindigkeit mit einer sehr viel kleineren Menge an Zinkhalogenid erreichen kann, als dies nach den bekannten Verfahren der Fall ist, wenn man dafür sorgt, daß die Zinkhalogenide in den Polymerisationsgemischen nicht, wie bislang, in suspendierter Form, sondern in gelöster Form vorliegen. Es wurde nämlich überraschenderweise gefunden, daß sich die Zinkhalogenide recht gut in den zu polymerisierenden Acrylsäurederivaten lösen und daß sie aus diesen Lösungen beim Verdünnen mit den organischen Lösungsmitteln und/oder bei Zusatz des Initiators nicht wieder ausgefällt werden. Das heißt, es wurde gefunden, daß man stabile homogene Polymerisationslösungen erhält, wenn man die Zinkhalogenide zunächst in einem Teil oder der Gesamtmenge der zu polymerisierenden Acrylsäurederivate löst und erst diese Lösung mit dem vorgesehenen organischen Lösungsmittel verdünnt und mi dem Initiator versetzt bzw. der Lösung des Initiators in dem organischen Lösungsmittel zusetzt.

Bei der bislang bei der quasi-ionischen Polymerisation von Acrylsäurederivaten mit Zinkhalogeniden als elektrophilen Katalysatoren praktizierten Arbeitsweise wurde so verfahren, daß die Zinkhalogenide zunächst im Lösungsmittel suspendiert wurden und die Suspension nach Zugabe des Initiators mit den zu polymerisierenden Acrylsäurederivaten versetzt wurde (siehe Macromolecules loc. cit.; DE-OS 3 504 168). Bei dieser Arbeitsweise wurden nur heterogene, die Zinkhalogenide in supendierter Form enthaltende Polymerisationsgemische, erhalten.

Mit Hilfe der erfindungsgemäß erhältlichen homogenen Polymerisationslösungen lassen sich die Acrylsäurederivate in hoher Geschwindigkeit und in zuverlässig reproduzierbarer Weise polymerisieren.

Die Erfindung betrifft daher ein Verfahren zur quasi-ionischen Polymerisation von Acrylsäurederivaten mit Initiatoren und Zinkhalogeniden, das durch gekennzeichnet ist, daß man die Polymerisation in der Weise vornimmt, daß man die Zinkhalogenide in zu polymerisierendem Acrylsäurederivat löst und die übrigen Komponenten des Polymerisationsgemisches mit dieser Lösung in Abwesenheit von Radikalbildnern vereinigt.

Die in dem erfindungsgemäßen Verfahren zu verwendenden Lösungen der Zinkhalogenide in den zu polymerisierenden Acrylsäurederivaten sind bereits durch einfaches Verrühren der vorgesehenen Zinkhalogenid-Menge in der gesamten oder einer Teilmenge der zu polymerisation Acrylsäurederivate erhältlich. Es hat sich allerdings als vorteilhaft erwiesen, um den Lösungsvorgang zu beschleunigen, die Zinkhalogenid-Acrylsäurederivat-Gemische auf Temperaturen von 30 bis 100°C, vorzugsweise 30 bis 60°C, zu erwärmen.

Mit Hilfe der erfindungsgemäß als Lösungsmittel für die Zinkhalogenide zu verwendenden Acrylsäure-Derivate lassen sich Lösungen der Zinkhalogenide in Acrylsäure-Derivaten herstellen, die je nach verwendetem Zinkhalogenid und Acrylsäure-Derivat 0,3 bis 30 Gew.-% Zinkhalogenid enthalten, bezogen auf das Gewicht der Lösungen.

Bei der Durchführung des erfindungsgemäßen Polymerisationsverfahren werden die erfindungsgemäß zu verwendenden Zinkhalogenid-Lösungen z.B. in die vorgelegte Lösung des Initiators in dem inerten Lösungsmittel und - wenn nur ein Teil des zu polymerisierenden Acrylsäurederivates zum Lösen des Zinkhalogenids verwendet wurde - dem restlichen zu polymerisierenden Acrylsäurederivat zudosiert. Es können jedoch auch die erfindungsgemäß zu verwendenden Lösungen der Zinkhalogenide in den zu polyme risierenden Acrylsäurederivaten vorgelegt und dann mit Lösungsmittel und Initiator oder der Lösung des Initiators im Lösungsmittel versetzt werden. Bei dieser Arbeitsweise ist auch möglich, nur einen Teil der Zinkhalogenid-Acrylsäurederivat-Lösung vorzulegen. Initiator und Lösungsmittel einzutragen und anschließend den Rest der Zinkhalogenid-Acrylsäurederivat-Lösung zuzudosieren.

Für die Polymerisation betragen die Konzentrationen der Zinkhalogenide in den Acrylsäure-Derivaten vorzugsweise 0,3 bis 10 Gew.-%, bezogen auf das Gewicht dieser Lösungen.

Von den als Katalysatoren in Betracht kommenden Zinkhalogeniden ZnCl2, ZnBr2 und ZnJ2 ist ZnJ2 besonders bevorzugt.

In dem erfindungsgemäßen Verfahren werden als inerte ornische Lösungsmittel vorzugsweise Kohlenwasserstoffe, wie Toluol, Xylol, oder chlorierte Kohlenwasserstoffe, wie Methylenchlorid oder 1,1,1-Trichlorethan, verwendet.

Das erfindungsgemäße Polymerisationsverfahren kann bei Temperaturen von -50 bis +100°C ausgeführt werden; vorzugsweise wird die Polymerisation bei Temperaturen von 0 bis +50°C vorgenommen.

Die erfindungsgemäße Polymerisation wird, wie dies für ionische Polymerisation üblich ist, in einer Inertgasatmosphäre, z.B. unter Stickstoff, und unter Ausschluß von Feuchtigkeit vorgenommen.

Als Vertreter der in dem erfindungsgemäßen Verfahren einzusetzenden Acrylsäurederivate seien vorzugsweise genannt: Methylacrylat, Sorbylacrylat, Ethylacrylat, n-, sek. und tert.-Butylacrylat, 2-Ethylhexylacrylat, 2-(Dimethylamino)-ethylacrylat, 3,3-Dimethoxypropylacrylat, 3-Methacryloxypropylacrylat, 2-(Trime-thylsilyloxy) -ethylacrylat, 2-Cyan-ethylacrylat, 4-Fluorophenylacrylat, 2-(Methacryloxy) ethylacrylat, 2-Chlorethylacrylat, 2-(Propenyl-(1)-oxy)-ethylacrylat, Phenylacrylat und Allylacrylat.

Der Monomergehalt der Polymerisationslösung sollte etwa 1 bis 90 Gew.-%, vorzugsweise 5 bis 50 Gew.-%, betragen.

Die vorteilhaften Wirkungen der im erfindungsgemäßen Verfahren einzusetzenden Lösungen der Zinkhalogenide in den Acrylsäurederivaten - Beschleunigung der Polymerisation, reproduzierbarer Verlauf der Polymerisation - sind unabhängig von der Art des verwendeten Initiators. Deshalb sind in dem erfindungsgemäßen Verfahren alle für die quasi-ionische Polymerisation bekannten Initiatoren verwendbar. Diese Initiatoren sind z.B. in den US-Patentschriften 4 414 372 und 4 508 880 sowie in der DE-OS 3 504 168 beschrieben. Bevorzugt werden O-Trisalkylsilylketenacetale und Mercaptosilane verwendet; von diesen Initiatortypen sind wiederum solche besonders bevorzugt, die geschützte funktionelle Gruppen aufweisen.

## Beispiel 1

In einem durch Erwärmen im Vakuum getrockneten, mit Magnetrührer ausgerüsteten 250 ml-Kölbchen werden 0,32 g (0,35 Mol-% bezogen auf Mole Butylacrylat) Zinkiodid 3 Stunden bei 80°C/0,1 bar getrocknet. Nach dem Abkühlen auf Raumtemperatur und Begasen mit Stickstoff werden 50 ml destabilisiertes, getrocknetes Butylacrylat zugegeben. Die Mischung wird unter Rühren auf 50°C erwärmt, bis sich das Zinkiodid vollständig gelöst hat (2 Stunden).

Die Lösung wird auf 0°C thermostatisiert, mit 110 ml trockenem Toluol und 5 ml Trimethyl-2-(trimethylsilyloxy)-ethylmercaptosilan versetzt. Die Temperatur der so erhaltenen Polymerisationslösung steigt innerhalb weniger Minunten auf 5 bis 6°C an und fällt dann wieder auf 0 bis 1°C zurück.

Nach 120 min wird die Polymerisation durch Zugabe von 5 ml Methanol beendet.

Die Ausbeute an Polymer nach dem Entfernen des Lösungsmittels und des nicht umgesetzten Butylacrylats am Rotationsverdampfer beträgt 41 g = 86% d.Th. $M_w/M_n = 1,10$.

Die vorstehend beschriebene Polymerisation wurde mehrfach wiederholt; es wurden stets Polybutylacrylate mit der gleichen Molmassenverteilung und in der gleichen Ausbeute erhalten.

Wurde die Polymerisation, wie bislang üblich, mit in Toluol suspendiertem Zinkiodid durchgeführt, so betrug die Ausbeute nach 120 min nur 31 g = 65 % d. Th. $M_w/M_n = 1,15$.

## Beispiel 2

Es wird wie in Beispiel 1 beschrieben gearbeitet mit dem einzigen Unterschied, daß anstelle der 0,32 g Zinkiodid nunmehr 0,65 g (0,71 Mol-%) Zinkiodid eingesetzt werden. Die Polymerisation wird nach 60 min, wie in Beispiel 1 beschrieben, abgebrochen.

Die Ausbeute an Polybutylacrylat beträgt 42 g (=89 % d.Th.).

Führt man diese Polymerisation in üblicher Weise durch, d.h., indem man zunächst das Zinkiodid in Toluol dispergiert, so beträgt die Ausbeute an Polybutylacrylat nach Abbruch der Polymerisation nach 60 min 30 g (=63 % d.Th.).

Nach Abbruch der Polymerisation nach 120 min betrug die Ausbeute an Polybutylacrylat 41 g (=86 % d.Th.). Bei einer Wiederholung des Versuchs mit Abbruch der Polymerisation nach 120 min betrug die Ausbeute an Polybutylacrylat nur 34 g (=71 % d.Th.). Diese unterschiedlichen Ausbeuten bei gleicher Ausführung des Verfahrens zeigen die schlechte Reproduzierbarkeit dieses Polymerisationsverfahrens.

## Beispiel 3

1 g Zinkiodid (=1,16 Mol-% bezogen auf Mole 2-Ethylhexylacrylat) wird wie in Beispiel 1 beschrieben getrocknet und durch 10 stündiges Rühren bei 30°C in 50 g 2-Ethylhexylacrylat gelöst.

In einem durch Erwärmen im Vakuum getrockneten, mit Magnetrührer ausgerüsteten 250 ml-Kölbchen werden 150 ml Toluol und 1,5 ml 1-Methoxy-2-methyl-1-trimethylsilyloxy-1-propan vorgelegt und auf 22°C thermostatisiert. Die Monomer-Zinkiodidlösung wird innerhalb 1 Stunde zur Lösung zudosiert. Die Polymerisationslösung wird nach 2 stündigem Rühren zur Beendigung der Polymerisation mit 2 ml Methanol versetzt.

Die Ausbeute an Poly-2-ethylhexylacrylat beträgt 50,5 g (100 % d.Th.).

## Patentansprüche

1. Verfahren zur quasi-ionischen Polymerisation von Acrylsäurederivaten in organischen Lösungsmitteln mit Initiatoren und Zinkhalogeniden, dadurch gekennzeichnet, daß man die Polymerisation in der Weist vornimmt, daß man die Zinkhalogenide in zu polymerisierendem Acrylsäurederivat löst und die übrigen Komponente des Polymerisationsgemisches mit dieser Lösung in Abwesenheit von Radikalbildnern vereinigt.

2. Verfahren nach Anspruch 1, dadurch gekennzeichnet, daß man die Lösung der Zinkhalogenide in den Acrylsäurederivaten durch Erwärmen der beiden Komponenten auf 30 bis 100°C herstellt.

3. Verfahren nach Ansprüchen 1 oder 2, dadurch gekennzeichnet, daß man die Zinkhalogenide in den Acrylsäure-Derivaten in einer Menge von 0,3 bis 30 Gew.-% bezogen auf das Gewicht der Lösungen löst.

4. Verfahren nach Ansprüchen 1, 2 oder 3, dadurch gekennzeichnet, daß als Zinkhalogenid Zinkjodid verwendet wird.

5. Verfahren nach einem der Ansprüche 1 bis 4, dadurch gekennzeichnet, daß für die Polymerisation die Konzentration der Zinkhalogenide in den Acrylsäure-Derivaten 0,3 bis 10 Gew.-%, bezogen auf das Gewicht dieser Lösungen, beträgt.

## Claims

1. Process for the quasi-ionic polymerization of acrylic acid derivatives in organic solvents with initiators and zinc halides, characterized in that the polymerization is carried out by a procedure in which the zinc halides are dissolved in the acrylic acid derivative to be polymerized and the other components of the polymerization mixture are combined with this solution in the absence of free radical formers.

2. Process according to Claim 1, characterized in that the solution of the zinc halides in the acrylic acid derivatives is prepared by heating the two components to 30 to 100°C.

3. Process according to Claims 1 or 2, characterized in that the zinc halides are dissolved in the acrylic acid derivatives in an amount of 0.3 to 30% by weight, based on the weight of the solutions.

4. Process according to Claims 1, 2 or 3, characterized in that zinc iodide is used as the zinc halide.

5. Process according to one of claims 1 to 4, characterized in that for the polymerization, the concentration of the zinc halides in the acrylic acid derivatives is 0.3 to 10% by weight, based on the weight of these solutions.

## Revendications

1. Procédé de polymérisation quasi ionique de dérivés d'acide acrylique dans des solvants organiques avec des initiateurs et des halogénures de zinc, caractérisé en ce qu'on effectue la polymérisation en dissolvant les halogénures de zinc dans le dérivé d'acide acrylique à polymériser et en rassemblant les autres composants du mélange à polymériser avec cette solution en l'absence de générateurs de radicaux.

2. Procédé suivant la revendication 1, caractérisé en ce que la solution des halogénures de zinc dans les dérivés d'acide acrylique est préparée par chauffage des deux composants à 30–100°C.

3. Procédé suivant les revendications 1 ou 2, caractérisé en ce qu'on dissout les halogénures de zinc dans les dérivés d'acide acrylique en une quantité de 0,3 à 30% en poids par rapport au poids des solutions.

4. Procédé suivant les revendications 1, 2 ou 3, caractérisé en ce qu'on utilise l'iodure de zinc comme halogénure de zinc.

5. Procédé suivant l'une des revendications 1 à 4, caractérisé en ce que la concentration des halogénures de zinc dans les dérivés d'acide acrylique pour la polymérisation s'élève à 0,3–10% en poids par rapport au poids de ces solutions.